# FASCICULE DE BREVET EUROPEEN

(11) **EP 3 301 342 B1**
(45) Date de publication et mention de la délivrance du brevet: **13.04.2022**
(21) Numéro de dépôt: 17194612.2
(22) Date de dépôt: 03.10.2017
(51) Int. Cl.: F16L 41/00, E03B 7/07, E04H 4/12, F16L 41/06, F16L 41/12, G01D 11/30

(54) **PORTE-INSTRUMENTS POUR CANALISATION ET APPAREILLAGE ASSOCIE**
INSTRUMENTENHALTERUNG FÜR KANALISATION, UND ENTSPRECHENDE GERÄTE
INSTRUMENT-HOLDER FOR PIPE AND ASSOCIATED APPARATUS

(30) Priorité: 03.10.2016 FR 1659533; 12.12.2016 FR 1662294
(43) Date de publication de la demande: 04.04.2018
(73) Titulaire: Pool Technologie, 34130 Valergues (FR)
(72) Inventeur: GRARD, Philippe, 34130 MAUGUIO (FR)
(74) Mandataire: Rhein, Alain

(56) Documents cités:
- WO-A1-2008/115211
- GB-A- 2 460 470
- US-A- 4 067 353
- US-A- 5 582 718
- US-A1- 2016 084 381
- M M Bamo Mesures: "SUPPORT DʼELECTRODE pH -REDOX", , 27 février 2009 (2009-02-27), XP055388922, Extrait de l'Internet: URL:http://www.bamo.fr/cbx/msf140-02.pdf [extrait le 2017-07-07]
- Emmanuel Barret: "PHILEO PRO LT Régulation de pH, NOTICE V2.0", ccei.fr , 25 mars 2015 (2015-03-25), XP055388937, www.ccei.fr Extrait de l'Internet: URL:http://eu.ccei-pool.com/fr/index.php?c ontroller=attachment&id_attachment=15240 [extrait le 2017-07-07]
- Pool Technologie: "POOLSQUAD 2G", , 30 septembre 2011 (2011-09-30), XP055388961, Extrait de l'Internet: URL:http://www.pool-technologie.com/fichie rs/spec_telechargement/Guide%20technique%2 0POOLSQUAD-POOLSQUAD%202G%20(2011).pdf [extrait le 2017-07-07]

## Description

La présente invention concerne un appareil de mesure et/ ou d'injection comprenant un porte-instrument(s) pour canalisation du type permettant d'introduire et de maintenir un outil de mesure et/ou d'injection dans la canalisation. Ce type d'appareil peut être utilisé dans des systèmes de traitement, par exemple des appareils de dosage ou d'électrolyse, en particulier pour des eaux de piscine, de pataugeoires ou d'aquarium ou encore des systèmes d'irrigation. Le document US5582718 décrit, en particulier à la figure 2, un appareil d'injection d'un liquide algicide dans une canalisation de recirculation d'eau d'une piscine.

Dans le domaine des appareils selon l'invention, il est souvent prévu d'utiliser des « sondes stylo » afin de déterminer les paramètres d'une eau circulant dans une canalisation. Les sondes stylo sont des sondes s'étendant longitudinalement comme un stylo.

Malheureusement, les dispositifs correspondants sont souvent complexes à monter sur une canalisation et certaines de ces sondes ont besoin d'être positionnées à la verticale vers le haut ou inclinées pour fonctionner. C'est en particulier le cas de certains capteurs de pH, plus particulièrement ceux du type à électrode de verre, et de certains capteurs Redox. Lorsque la sonde est montée à la verticale vers le bas, la sonde ne fonctionne plus en raison d'une bulle d'air venant perturber la mesure de la sonde et qui engendre des données erratiques. Cette bulle d'air est générée par des réactions chimiques dans la partie de travail de la sonde de pH.

En outre, plusieurs outils peuvent être introduits mais en utilisation, ils se perturbent entre eux.

De plus l'art antérieur propose des dispositifs nécessitant une découpe et un collage de la canalisation qui rallonge les étapes de montage.

Un objectif de la présente invention est de proposer un dispositif et un appareil simple à monter sur une canalisation et occupant un moindre encombrement une fois monté.

Un autre objectif de l'invention est de proposer un système où lorsque plusieurs outils sont montés, ils se perturbent moins entre eux que dans l'art antérieur.

Pour atteindre ces objectifs, l'invention propose un appareil de mesure et/ou d'injection selon les caractéristiques techniques de la revendication 1.

En particulier, le porte-instrument comprend plusieurs structures porteuses configurées pour introduire et maintenir un outil de mesure et/ou d'injection dans la canalisation et formant projection de sorte à maintenir ledit outil en position oblique dans la canalisation.

Avantageusement, la structure porteuse oblique associée à un outil permet de monter l'outil en position sensiblement verticale mais avec un angle oblique. Ceci permet d'utiliser des sondes de certains capteurs de pH, en particulier du type à électrode de verre, et de certains capteurs Redox. En outre, le montage du dispositif selon l'invention permet de limiter l'encombrement horizontal. En effet, l'outil n'occupe pas un volume horizontal significatif.

Selon d'autres aspects pris isolément ou combinés selon toutes les combinaisons techniquement réalisables :
- ladite structure porteuse s'étend suivant un angle oblique de préférence inférieur à 90 degrés et de préférence supérieur à ou égal 10 degrés, en particulier d'environ 15 à 25 degrés, par rapport à la normale à l'axe longitudinal de la canalisation en particulier suivant l'axe longitudinal de la bride ; et/ou
- le porte-instrument comprend plusieurs structures porteuses, de préférence au moins deux structures porteuses, lesdites structures porteuses étant de préférence sensiblement parallèles deux à deux ; et/ou
- le porte-instrument comprend quatre structures porteuses, dont deux étant de préférence diamétralement opposées aux deux autres sur ladite bride longitudinale ; et/ou
- au moins un outil est un capteur ; et/ou
- au moins un outil est un injecteur de liquide, de préférence une cartouche d'injection de liquide ; et/ou
- le porte-instrument comprend une cage de protection d'outil montée sur la structure porteuse et/ou un moyen de blocage et de positionnement d'outil ; et/ou
- le mécanisme de fixation comprend des éléments de fixation et un moyen de retenue des éléments de fixation. préférence, l'appareil comporte au moins un joint d'ouverture disposé entre ladite ouverture et la canalisation, et au moins un joint d'outil.

De préférence, le joint d'ouverture est configuré pour réaliser une étanchéité de la structure porteuse tout en étant adapté à plusieurs dimensions de canalisations.

L'invention sera davantage détaillée par la description de modes de réalisation non limitatifs, et sur la base des figures annexées, dans lesquelles :
- la figure 1 est une vue d'ensemble du dispositif selon une variante préférée équipé d'outils ;
- la figure 2 est une vue de face d'une partie du dispositif de la figure 1 ;
- la figure 3 est une vue de côté de la partie de dispositif de la figure 2 ;
- la figure 4 est une vue de côté du dispositif de la figure 1 dont les structures porteuses sont dans une première position ;
- la figure 5 est une vue de côté du dispositif de la figure 1 dont les structures porteuses sont dans une deuxième position ;

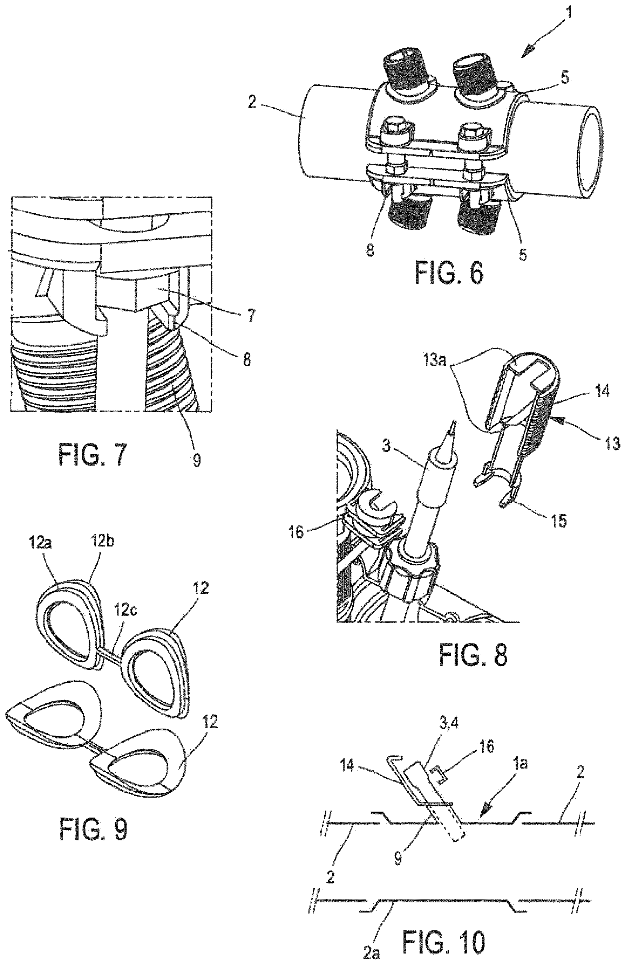

- la figure 6 est une vue dans l'espace du dispositif selon une autre variante préférée monté sur une canalisation ;
- la figure 7 est une vue rapprochée d'une partie du dispositif de la figure 6 ;
- la figure 8 est une vue dans l'espace d'un dispositif selon une variante, équipé d'une cage de protection d'outil ;
- la figure 9 est une vue dans l'espace de joints d'ouverture pour un dispositif selon une variante préférée ; et
- la figure 10 est un schéma d'une variante alternative du dispositif.

L'invention porte sur appareil de mesure et/ou d'injection comportant un porte-instruments 1 pour une canalisation 2. Ce dispositif permet d'introduire et maintenir des outils dans la canalisation 2 afin de mesurer des paramètres du liquide de la canalisation et/ou afin d'injecter un liquide se mélangeant au liquide de cette canalisation. Ainsi, ce porte-instruments 1 est du type permettant d'introduire et de maintenir un outil de mesure 3 et/ou d'injection 4 dans la canalisation 2. Le dispositif est particulièrement adapté aux canalisations d'eaux de piscine, dans des réseaux ayant des pressions de service entre 0 et 6 bars. La constitution des éléments du dispositif est de préférence adaptée en conséquence.

Ce type de dispositif permet de disposer au moins un capteur 3, en particulier une sonde, et/ou au moins un injecteur de liquide 4, de préférence une cartouche d'injection de liquide.

Le capteur 3 permet de mesurer des paramètres du liquide de la canalisation par exemple pour le corriger ou pour adapter un traitement de liquide. L'outil formant capteur peut être notamment une sonde pH, une sonde Redox ou ORP, une sonde chlore, une électrode de mise à la terre, une sonde de mesure de conductivité, une sonde de mesure de température, un capteur de débit, un capteur TDS.

L'injecteur 4 permet par exemple d'ajuster un paramètre tel que le pH ou la dureté en injectant un liquide adapté. L'injecteur 4 peut aussi permettre d'injecter un produit de traitement. En particulier, l'injecteur comprend une structure à effet venturi, et de préférence une structure permettant le positionnement optimal du liquide injecté dans le flux de la canalisation 2.

Le porte-instruments 1 comprend au moins une bride longitudinale 5 en forme d'élément de cylindre. La bride longitudinale 5 est configurée pour entourer la canalisation 2. La bride est par exemple de forme tubulaire ou semi-tubulaire. Selon une variante préférée, le dispositif comprend deux brides 5 semi-tubulaires permettant de mieux emmancher la canalisation 2 et de s'adapter à la taille de celle-ci. En particulier, les brides 5 sont configurées pour être disposés de part et d'autre de la canalisation 2. Plus particulièrement, les brides ont des entretoises qui permettent de s'adapter à différents diamètres et sont de préférence associées à un joint particulier détaillé plus bas. Avantageusement les dimensions de ce dispositif lui permettent de s'adapter à des tailles standard de canalisation, notamment par exemple les canalisations européennes à 55 mm et 63 mm de diamètre et les canalisations américaines à 1"1/2 et 2" de diamètre. La côte préférée de la bride 5 est de 31,5 mm de rayon.

Le porte-instruments 1 comprend en outre un mécanisme de fixation 6 associé à ladite bride 5 pour fixer le porte-instrument 1 sur la canalisation 2. Le mécanisme de fixation 6 comprend au moins un élément de fixation 7 vissable configuré pour solidariser ladite bride 5 sur la canalisation 2. Bien entendu, on peut envisager d'utiliser d'autres systèmes (rivets, grenouillères) mais des éléments vissables sont préférés pour une meilleure fixation. De préférence, le mécanisme de fixation 6 comprend des éléments de fixation 7 vissables de part et d'autre du porte-instruments 1 en particulier en formant un cadre pour une meilleure fixation.

Selon une variante, le mécanisme de fixation 6 comprend un moyen de retenue des éléments de fixation 7. De préférence, le moyen de retenue comprend une cage de retenue 8 logeant un élément de fixation 7, en particulier un écrou. Avantageusement, le moyen de retenue 8 permet de ne pas perdre les éléments de fixation 7. Le moyen de retenue 8 est par exemple sous la forme d'un logement ouvert latéralement par rapport à l'axe principal du porte instrument 1, logeant l'élément de fixation 7 qui est ici un écrou. Le logement peut être traversé par un élément de fixation mâle, suivant une direction perpendiculaire à l'axe principal du porte instrument 1. L'élément de fixation mâle, tel qu'une vis parcourant les deux brides, coopère avec l'élément de fixation femelle. De préférence, les brides 5 comprennent une bride supérieure et une bride inférieure, et le moyen de retenue 8 est sur la bride inférieure.

Le porte-instruments 1 comprend en outre au moins une structure porteuse 9 débouchant sur une ouverture 10 ménagée sur la bride longitudinale 5. La bride 5 s'étend suivant un axe longitudinal. En particulier, lorsque la bride 5 est montée sur la canalisation 2, l'axe longitudinal de la bride 5 et celui de la canalisation 2 sont sensiblement confondus. La longueur de la bride 5 suivant l'axe longitudinal est suffisante pour y prévoir cette ouverture 10 et la structure porteuse 9.

La structure porteuse 9 est configurée pour introduire et maintenir un outil 3, 4 dans la canalisation. Pour ce faire, un outil 3, 4 peut être introduit dans la structure porteuse 9 et passer à travers l'ouverture 10 et l'ouverture correspondante de la canalisation pour pénétrer la canalisation 2. L'outil est en particulier une partie d'un capteur 3 ou d'un injecteur de liquide 4.

En outre, la structure porteuse 9 comprend un moyen de retenue de l'outil configuré pour maintenir l'outil à proximité de, et de préférence partiellement dans, la structure porteuse 9. Avantageusement, le moyen de retenue de l'outil permet d'éviter que l'outil ne soit emporté dans la canalisation 2 ou éjecté de la canalisation.

De préférence, le moyen de retenue de l'outil comprend un joint d'outil 11. Le joint d'outil 11 est de préférence une pièce séparée du porte-instruments 1, en particulier de la structure porteuse 9, dans un matériau adapté. On peut aussi envisager que ce joint d'outil 11 soit une pièce rapportée du porte-instruments 1, en particulier de la structure porteuse 9. Le joint d'outil 11 est de préférence une pièce longitudinale s'étendant suivant toute la longueur de la structure porteuse 9 dans le sens axial. Le joint d'outil 11 est circulaire dans le sens transversal.

De préférence, le porte-instruments 1 comprend un écrou 11a pour au moins une structure porteuse 9. L'écrou 11a permet de fixer le joint d'outil 11 tout en laissant une ouverture pour introduire un outil. Selon une variante, l'écrou 11a comprend une structure formant joint d'outil 11. L'écrou 11a est de préférence vissable sur la structure porteuse 9. On peut en outre prévoir un couvercle 11b permettant de clôturer au moins une structure porteuse 9. Cela permet d'éviter des fuites au niveau de la structure porteuse 9 lorsqu'il n'y a pas d'outil.

La structure porteuse 9 comprend de préférence un rebord 9a sur l'extérieur, permettant de positionner le joint d'outil 11 sur la structure porteuse 9.

Selon une variante, pour éviter des fuites au niveau de l'ouverture 10, il est prévu un joint d'ouverture 12 disposé sensiblement entre l'ouverture 10 du porte-instruments et l'ouverture correspondante de la canalisation. Le joint d'ouverture 12 est de préférence une pièce élastomère pouvant être faite par surmoulage par injection. Le joint d'ouverture 12 fonctionne en particulier comme un joint torique. Pour ce faire, le joint d'ouverture 12 comprend de préférence une première portion 12a configurée pour pénétrer une gorge de la bride 5 autour de la structure porteuse 9, et une deuxième portion 12b configurée pour être apposée sur la canalisation 2.

De préférence, les joints d'ouverture 12 sont collés deux à deux suivant les positions des structures porteuses 9 pour faciliter le montage du porte-instruments 1. En outre, dans la variante préférée où une gorge est prévue sur la bride, une rainure y est également prévue pour recevoir une bande intermédiaire 12c du joint d'ouverture 10. Cela facilite davantage le montage du porte-instruments.

Le joint d'ouverture 12 à une épaisseur telle qu'il permet de s'adapter au diamètre de la canalisation 2. Plus le diamètre de la canalisation est grand, plus le joint d'ouverture est compressé. Pour une canalisation suivant la norme américaine, le joint d'ouverture est davantage compressé quand le porte-instruments est monté que pour une canalisation suivant la norme européenne. Avantageusement, cela ajoute à la simplicité de montage du porte instrument.

Le joint d'ouverture 12 est de préférence une pièce séparée du porte-instruments 1, dans un matériau adapté. Le joint 12 est de préférence surmoulé. On peut aussi envisager que le joint d'ouverture 12 soit une pièce rapportée du porte-instruments ou un joint du commerce.

Selon l'invention, ladite structure porteuse 9 forme projection obliquement par rapport à une normale à l'axe longitudinal de ladite bride 5. En particulier, la structure porteuse 9 forme avec la normale à l'axe longitudinal de la bride 5, un angle donné d'un côté ou de l'autre par rapport à l'axe longitudinal. La projection est de préférence radiale, c'est-à-dire que son prolongement croise l'axe longitudinal de la bride 5.

Avantageusement, la structure porteuse 9 oblique associée à un outil permet de monter l'outil 3, 4 en position sensiblement verticale mais avec un angle oblique. En outre, le montage du porte-instruments 1 permet de limiter l'encombrement horizontal. En effet, l'outil n'occupe pas un volume horizontal significatif, en particulier en référence à une canalisation 2 horizontale, par exemple comme illustré dans les figures.

Selon une variante, pour un porte-instruments 1 positionné verticalement, ladite structure porteuse 9 s'étend suivant un angle oblique de préférence inférieur à 90 degrés et de préférence supérieur à 10 degrés, en particulier d'environ 15 à 25 degrés, par rapport à la normale à l'axe longitudinal de la bride. Avantageusement, une structure porteuse 9 portant une sonde « stylo » orientée à 10 degrés par rapport à la verticale permet un fonctionnement quasiment normal de ladite sonde « stylo », en particulier même en dépit du vieillissement de la sonde. Ceci permet d'utiliser des sondes qui ne fonctionneraient pas en position horizontale. Les meilleurs résultats ont été obtenus avec une orientation d'environ 15 degrés.

Selon une variante, le porte-instruments 1 comprend plusieurs structures porteuses 9. Avantageusement l'utilisation de plusieurs structures porteuses permet d'avoir plusieurs outils pour des utilisations spécifiques en même temps, par exemple plusieurs capteurs 3 en tandem ou au moins un capteur 3 et au moins un injecteur 4 sur le même porte-instruments 1.

De préférence, le porte-instruments 1 comprend au moins deux structures porteuses 9 étant de préférence sensiblement parallèles deux à deux. Avantageusement, des structures porteuses 9 parallèles permettent d'éviter qu'un outil 3, 4 ne gêne l'autre du point de vue de l'encombrement spatial.

Selon une variante, le porte-instruments 1 comprend au moins deux structures porteuses 9 étant diamétralement opposées deux à deux sur ladite au moins une bride longitudinale 5. Avantageusement, des structures porteuses diamétralement opposées permettent d'éviter qu'un outil ne gêne l'autre du point de vue de l'encombrement spatial, ainsi que la perturbation des données de mesure.

Dans certains cas (non-représentés), les structures porteuses 9 diamétralement opposées permettent d'avoir un alignement des ouvertures 10 de sorte à percer la canalisation en une fois pour deux structures porteuses 9.

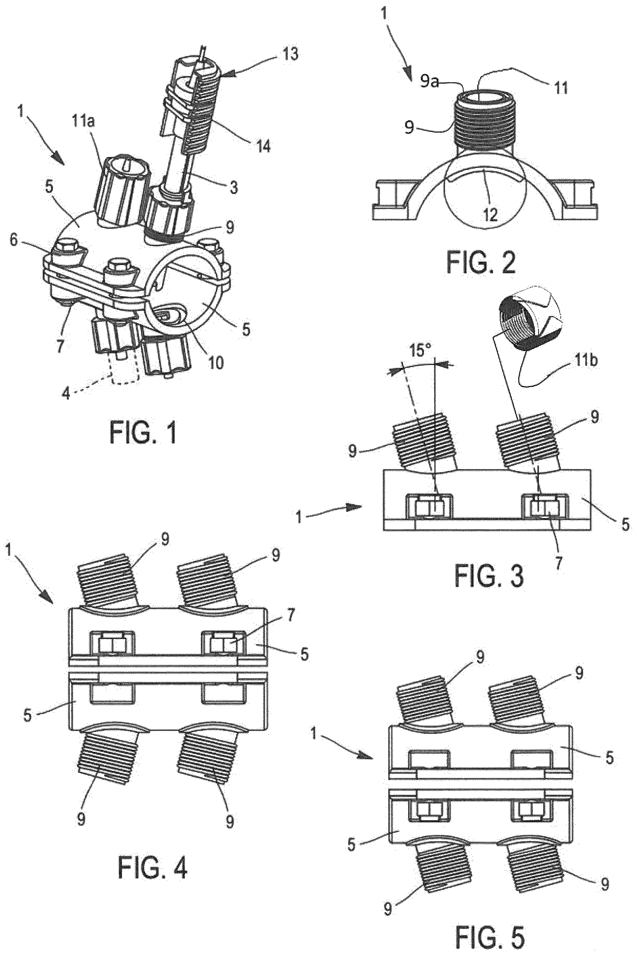

Selon une variante, le porte-instruments 1 comprend quatre structures porteuses, dont deux étant de préférence diamétralement opposées aux deux autres sur ladite bride longitudinale 5. Lesdites structures porteuses 9 sont de préférences parallèles deux à deux. Plus préférentiellement, les deux structures porteuses 9 d'une bride 5 sont parallèles entre elles. La particularité de cette variante est qu'elle peut prendre huit configurations en fonction de l'orientation horizontale ou verticale de la canalisation 2, de l'orientation du flux d'un côté ou de l'autre du porte-instruments 1, des deux structures porteuses 9 d'une bride 5 étant parallèles ou non à celles de l'autre bride 5. Les configurations horizontales parallèles et non parallèles sont illustrées dans les figures 4 et 5 respectivement.

Selon une variante, le porte-instruments 1 comprend une cage de protection d'outil 13 étant de préférence montée sur la structure porteuse 9. La cage 13 comprend un corps de protection 14 configuré pour entourer l'outil et au moins une patte de fixation 15 configurée pour coopérer avec l'écrou 11a pour fixer la cage 13 sur la structure porteuse 9. Le corps de protection 14 peut comporter des aspérités sur sa partie externe. En particulier, la patte de fixation 15 est configurée pour coopérer avec l'écrou 11a pour fixer la cage 13 à la structure porteuse 9. Plus particulièrement, l'écrou 11a est muni d'une gorge dans laquelle la patte de fixation glisse. La patte de fixation 15 empêche l'instrument d'être trop enfoncé dans la canalisation, et positionne l'instrument dans le bon sens. La patte de fixation 15 empêche l'instrument d'être éjecté de la canalisation.

En particulier, la cage de protection 13 forme une entretoise. De préférence, la cage 13 entoure partiellement l'outil et une pièce complémentaire 16 coopère avec la cage 13 pour entourer complètement l'outil. La pièce complémentaire 16 peut être fixée à la cage 13 par complémentarité de forme, en particulier par glissement. Avantageusement, une structure de cage 13 en deux pièces est un moyen simplifié d'entourer complètement l'outil pour une meilleure protection. En particulier, la pièce complémentaire 16 est une clé de verrouillage coopérant avec ladite entretoise. L'entretoise associée à la clé de verrouillage forme une bride de sécurité.

Le porte-instruments 1 comprend en outre un moyen 13a de blocage et de positionnement d'outil. Le moyen de blocage et de positionnement comprend un relief adapté à bloquer l'outil en position en dépit des mouvements, par exemple du liquide. Une portion de l'outil est coulissée dans le moyen de blocage suivant une direction parallèle à l'axe longitudinal de la structure porteuse 9. Le moyen 13a fait de préférence partie de la cage 13 et/ou de la pièce complémentaire 16, en particulier la clé de verrouillage.

En particulier, l'entretoise et la clef de verrouillage sont conçues pour la quasi-totalité des sondes du marché. Pour réaliser cette fonction l'entretoise est munie de stries permettant à la clef de s'ajuster parfaitement à une extrémité de sonde « stylo ».

Selon une variante préférée, l'outil est monté sur la cage 13 et sur l'écrou 11a, et l'ensemble est monté, en particulier vissé, sur la structure porteuse 9. Le vissage de cet ensemble réalise un blocage de l'outil sur le porte-instruments.

Selon une variante alternative, le porte-instruments la comprend une structure porteuse 9 débouchant directement dans un élément canalisation 2a suivant l'angle requis par rapport à l'axe longitudinal de la canalisation 2. En particulier, lorsque le porte-instruments la est monté sur la canalisation 2, l'axe longitudinal de la canalisation 2 est sensiblement confondu avec celui de l'élément de canalisation 2a. L'élément de canalisation 2a est par exemple une canalisation. L'élément de canalisation 2a peut être raccordé sur une canalisation 2 dans laquelle on souhaite injecter un liquide et/ou mesurer un paramètre. Le porte-instruments la peut comprendre une ou plusieurs des caractéristiques détaillées précédemment. En particulier, le porte-instruments la peut comprendre une ou plusieurs structures porteuses 9.

Cette variante alternative peut aussi être prévue solidaire d'une cellule de traitement, par exemple d'une cellule d'électrolyse de piscine. Dans ce cas, la canalisation 2 débouche sur le porte instrument la et le liquide venant de la canalisation 2 passe par le porte instruments la, puis la cellule de traitement avant d'en sortir.

L appareil de mesure et/ou d'injection selon l'invention permet de mesurer des paramètres du liquide de la canalisation 2 et/ou d'injecter un produit dans la canalisation 2, par exemple de l'acide.

L'appareil de mesure et/ou d'injection comprend en outre au moins un outil de mesure 3 et/ou d'injection 4 pouvant être inséré dans ladite structure porteuse 9, au moins un joint d'ouverture 12 pouvant être disposé entre ladite ouverture 10 et la canalisation 2, et de préférence au moins un joint d'outil 11.

Il est également décrit un appareillage de traitement de liquide comprenant un appareil tel que décrit précédemment. Ce type d'appareillage de traitement peut être utilisé dans des systèmes de traitement, par exemple des appareils de dosage ou d'électrolyse, en particulier pour des eaux de piscine, de pataugeoires ou d'aquarium ou encore des systèmes d'irrigation.

Il est également décrit une méthode de montage d'un porte-instruments 1 tel que décrit précédemment à une canalisation 2 comprenant des étapes de :
- disposer au moins une bride longitudinale 5 en forme d'élément de cylindre, entourant la canalisation 2,
- fixer le porte-instruments 1 comprenant la bride 5 sur la canalisation 2, et
- introduire et maintenir un outil dans la canalisation, obliquement par rapport à une normale à l'axe longitudinal de la bride.

De préférence, au moins un joint d'ouverture 12 est disposé entre la bride 5 et la canalisation 2.

En particulier, le procédé comprend une étape de percer au moins un trou, dans la canalisation 2 à travers la structure porteuse 9 à utiliser pour y introduire l'outil 3,4. En particulier, une fois le trou percé, l'outil est assemblé à l'écrou 11a, de préférence avec la pièce complémentaire, et l'ensemble est vissé sur la structure porteuse 9.

La forme du joint 12 par sa forme permet de faire l'étanchéité du trou percé.

Ces étapes sont répétées pour chacune des structures porteuses 9, en particulier quatre fois. Certaines structures porteuses 9 peuvent être fermées par un couvercle 11b.

## Revendications

1. Appareil de mesure et/ou d'injection pour appareillage de traitement des eaux de piscine, pataugeoire, aquarium ou système d'irrigation, comprenant au moins un outil de mesure(3) et/ou d'injection(4) pouvant être inséré dans une structure porteuse et un porte-instrument (1 ; la) comprenant une bride longitudinale (5) en forme d'élément de cylindre comportant deux brides semi-tubulaires et un mécanisme de fixation (6) associé à ladite bride (5) pour fixer le porte-instrument (1 ; la) sur une canalisation (2), ledit porte-instrument (1 ; 1a) comprenant ladite au moins une structure porteuse (9) débouchant sur une ouverture (10) ménagée sur la bride longitudinale (5) et configurée pour introduire et maintenir dans la canalisation (2) ledit outil (3, 4) sous forme d'une partie de capteur ou d'injecteur de liquide **caractérisé en ce que** ladite structure porteuse (9) forme projection obliquement par rapport à une normale à l'axe longitudinal de la bride (5).

2. Appareil selon la revendication précédente, comprenant plusieurs structures porteuses (9) configurées pour introduire et maintenir l' outil de mesure et/ou d'injection (3, 4) dans la canalisation (2) et formant projection de sorte à maintenir ledit outil en position oblique dans la canalisation.

3. Appareil selon l'une des revendications précédentes, dans lequel ladite structure porteuse (9) s'étend suivant un angle oblique de préférence inférieur à 90 degrés et de préférence supérieur à ou égal 10 degrés, en particulier d'environ 15 à 25 degrés, par rapport à la normale à l'axe longitudinal de la bride (5).

4. Appareil selon la revendication 2, dans lequel lesdites structures porteuses sont sensiblement parallèles deux à deux.

5. Appareil selon l'une des revendications précédentes, comprenant deux structures porteuses (9) diamétralement opposées à deux autres.

6. Appareil selon l'une des revendications précédentes, dans lequel ledit au moins un outil est un capteur (3).

7. Appareil selon l'une des revendications précédentes, dans lequel ledit au moins un outil est un injecteur de liquide (4), de préférence une cartouche d'injection de liquide.

8. Appareil selon l'une des revendications précédentes, comprenant une cage de protection d'outil (13) montée sur la structure porteuse (9) et/ou un moyen (13a) de blocage et de positionnement d'outil.

9. Appareil selon l'une des revendications précédentes, dans lequel le mécanisme de fixation (6) comprend des éléments de fixation (7) et un moyen de retenue (8) des éléments de fixation (7).

10. Appareil selon l'une des revendications précédentes, comprenant au moins un joint d'ouverture (12) destiné à être disposé entre ladite ouverture (10) et la canalisation et au moins un joint d'outil (11).

## Patentansprüche

1. Mess- und/oder Injektionsvorrichtung für Wasseraufbereitungseinrichtungen in Schwimmbädern, Planschbecken, Aquarien oder Bewässerungsanlagen, die wenigstens ein Mess-(3) und/oder Injektionswerkzeug (4), das in eine Trägerstruktur eingesetzt werden kann, und einen Instrumententräger (1; 1a) umfasst, der einen Längsflansch (5) in Form eines Zylinderelements, das zwei halbrohrförmige Flansche aufweist, und einen mit dem Flansch (5) verknüpften Befestigungsmechanismus (6) zum Befestigen des Instrumententrägers (1; 1a) an einer Rohrleitung (2) umfasst, wobei der Instrumententräger (1; 1a) die wenigstens eine Trägerstruktur (9) umfasst, die in eine Öffnung (10) mündet, die an dem Längsflansch (5) angebracht ist und zum Einführen und Halten des Werkzeugs (3, 4) in Form eines Teils eines Sensors oder eines Flüssigkeitsinjektors in der Rohrleitung (2) konfiguriert ist, **dadurch gekennzeichnet, dass** die Trägerstruktur (9) einen Vorsprung ausbildet, der in Bezug auf eine Normale zu der Längsachse des Flansches (5) schräg verläuft.

2. Vorrichtung nach dem vorhergehenden Anspruch, die mehrere Trägerstrukturen (9) umfasst, die zum Einführen und Halten des Mess- und/oder Injektionswerkzeugs (3, 4) in die Rohrleitung (2) konfiguriert sind und einen Vorsprung ausbilden, um das Werkzeug in einer Schräglage in der Rohrleitung zu halten.

3. Vorrichtung nach einem der vorhergehenden Ansprüche, wobei sich die Trägerstruktur (9) in einem schrägen Winkel von vorzugsweise weniger als 90 Grad und vorzugsweise mehr als oder gleich 10 Grad, insbesondere etwa 15 bis 25 Grad, in Bezug auf die Normale zu der Längsachse des Flansches (5) erstreckt.

4. Vorrichtung nach Anspruch 2, wobei die Trägerstrukturen im Wesentlichen paarweise parallel sind.

5. Vorrichtung nach einem der vorhergehenden Ansprüche, die zwei Trägerstrukturen (9) umfasst, die zwei anderen diametral gegenüberliegen.

6. Vorrichtung nach einem der vorhergehenden Ansprüche, wobei das wenigstens eine Werkzeug ein Sensor (3) ist.

7. Vorrichtung nach einem der vorhergehenden Ansprüche, wobei das wenigstens eine Werkzeug ein Flüssigkeitsinjektor (4), vorzugsweise eine Flüssigkeitsinjektionskartusche, ist.

8. Vorrichtung nach einem der vorhergehenden Ansprüche, die einen an der Trägerstruktur (9) montierten Werkzeugschutzkäfig (13) und/oder ein Mittel (13a) zum Arretieren und Positionieren des Werkzeugs umfasst.

9. Vorrichtung nach einem der vorhergehenden Ansprüche, wobei der Befestigungsmechanismus (6) Befestigungselemente (7) und ein Mittel (8) zum Festhalten der Befestigungselemente (7) umfasst.

10. Vorrichtung nach einem der vorhergehenden Ansprüche, die wenigstens eine Öffnungsdichtung (12), die dafür bestimmt ist, zwischen der Öffnung (10) und der Rohrleitung angeordnet zu werden, und wenigstens eine Werkzeugdichtung (11) umfasst.

## Claims

1. Measuring and/or injection device for an apparatus for treating water in swimming pools, paddling pools, aquariums, or irrigation systems, said device comprising at least one measuring (3) and/or injection (4) tool which can be inserted into a carrier structure, and also comprising an instrument holder (1; 1a) that has a longitudinal flange (5) in the form of a cylinder element that comprises two semi-tubular flanges and a securing mechanism (6), which securing mechanism is associated with said flange (5) and intended for securing the instrument holder (1; 1a) on a pipe (2), said instrument holder (1; 1a) comprising said at least one carrier structure (9), which carrier structure leads to an opening (10), is provided on the longitudinal flange (5), and is configured to introduce said tool (3, 4), which is in the form of a sensor part or liquid injector part, into the pipe (2) and to keep said tool in said pipe, **characterized in that** said carrier structure (9) forms a projection obliquely with respect to a normal to the longitudinal axis of the flange (5).

2. Device according to the preceding claim, comprising a plurality of carrier structures (9) which are designed to introduce the measuring and/or injection tool (3, 4) into the pipe (2) and to keep said tool in said pipe and which form a projection so as to keep said tool in an oblique position in the pipe.

3. Device according to either of the preceding claims, wherein said carrier structure (9) extends at an oblique angle, preferably less than 90 degrees and preferably greater than or equal to 10 degrees, in particular approximately 15 to 25 degrees, with respect to the normal to the longitudinal axis of the flange (5).

4. Device according to claim 2, wherein pairs of said carrier structures are substantially mutually parallel.

5. Device according to any of the preceding claims, comprising two carrier structures (9) which are diametrically opposed to two others.

6. Device according to any of the preceding claims, wherein said at least one tool is a sensor (3).

7. Device according to any of the preceding claims, wherein said at least one tool is a liquid injector (4), preferably a liquid injection cartridge.

8. Device according to any of the preceding claims, comprising a tool protection housing (13) mounted on the carrier structure (9) and/or a means (13a) for locking and positioning the tool.

9. Device according to any of the preceding claims, wherein the securing mechanism (6) comprises securing elements (7) and a retaining means (8) for the securing elements (7).

10. Device according to any of the preceding claims, comprising at least one opening seal (12) intended to be arranged between said opening (10) and the pipe, and at least one tool seal (11).
